# EUROPEAN PATENT APPLICATION

(11) **EP 2 551 699 A2**
(43) Date of publication of application: **30.01.2013**
(21) Application number: 12177029.1
(22) Date of filing: 19.07.2012
(51) Int. Cl.: G01S 17/88, G01S 17/89, F03D 7/04, G06T 7/00

(54) **System and method for monitoring and controlling physical structures**

(30) Priority: 29.07.2011 US 201113193663
(71) Applicant: General Electric Company, Schenectady, NY 12345 (US)
(72) Inventor: Wu, Juntao, Niskayuna, NY 12309 (US); Zheng, Danian, Niskayuna, NY 12309 (US); Liu, Ping, Niskayuna, NY 12309 (US); Lee, Boon Kwee, Niskayuna, NY 12309 (US); Monk, David James, Niskayuna, NY 12309 (US); Chen, Qin, Niskayuna, NY 12309 (US); Graham, Frederick Gorum III, Niskayuna, NY 12309 (US); Spratt, William Thomas, New York, NY 12210 (US)
(74) Representative: Bedford, Grant Richard

(57) **Abstract**

A system (100) for controlling a wind turbine (300) is disclosed. A system (100) includes a light source (110) and a beam scanner (120) to scan the light pulses over the wind turbine (120). The system (100) further receives backscattered light pulses and subsequently, provides a signal corresponding to the light pulses. The system (100) adjusts a threshold of the signal based on a normalized value of a detected peak value of the signal. The system (100) associates a time of flight with each of the received backscattered light pulse. The system (100) generates an image of the wind turbine based on the time of flight associated with the light pulses and subsequently, compares the generated image with at least one known image of the wind turbine. The system (100) generates a health profile of the wind turbine (300) based on the comparison and subsequently, change one or more parameters of the wind turbine (300) based on the health profile.

## Description

Certain embodiments presented herein relate generally to monitoring and controlling systems, and more specifically to a system for monitoring and controlling a physical structure.

Physical structures such as wind turbines are known as an important source for renewable energy. Wind turbines convert wind energy into electrical energy. Specifically, wind blowing over the blades causes the blades to produce 'lift' and thus rotate about a shaft. Further, the shaft drives a generator which produces electrical energy. Typically, the wind turbines are exposed to variable aerodynamic load due to varying wind conditions. Moreover, the wind turbines are also exposed to unpredictable harsh weather conditions. In such instances, it is desirable to know the wind turbine components' spatial behavior, such as overall bending and twisting along the blades length, tower top displacement and vibration, yaw angle, and the like. These sensing feedbacks may be used for monitoring the physical health of the wind turbine components, which upon going unnoticed may lead to catastrophic failure of the wind turbine. Also, these sensing feedbacks may be used for controlling the wind turbine's operating parameters for achieving better efficiency (energy production) of the wind turbines.

This problem is partly mitigated by wind turbine monitoring systems which provide wind turbine sensing feedback, and help in detecting impending wind turbine component failure. Some known wind turbine monitoring systems such as outboard sensor systems may be used to monitor mechanical stress on the blades of the wind turbine. The outboard sensor systems utilize sensors installed on the blades of the wind turbine. For example, fiber bragg grating (FBG) strain sensors are generally mounted outside the blades of the wind turbine for measuring stain occurring on the blades. However, such sensors are subjected to harsh weather conditions, such as high wind speeds, rainfall, snow, hail and the like, which may shorten the life of the sensors. Further, the outboard sensor system also has low spatial resolution limited by the number of the sensors that may be installed on the blades of the wind turbine. Moreover, a system of triaxial accelerometers embedded in each blade of the turbine may be used for measuring the operating frequencies of the turbine blades and may alert when a significant deviation from normal operating parameters is monitored, either from excessive stress, or blade damage. However, this approach also has a low spatial resolution and a limitation on the low-frequency response.

Therefore, there is a need for a monitoring and controlling system that overcomes these and other problems associated with known solutions.

According to one aspect of the present invention a system includes a light source adapted to generate light pulses. The system also includes a beam scanner coupled with the light source. The beam scanner is adapted to scan the light pulses over a predefined capture area of a physical structure. The system further includes a photo-detector adapted to receive backscattered light pulses from the physical structure and subsequently provide a signal corresponding to each of the light pulse. The system further includes a pre-processing module to adjust a threshold of the signal based on a normalized value of a detected peak value of the signal. The system also includes an association module to associate a time of flight with each of the received backscattered light pulse. The system further includes an image generator to generate an image of the physical structure based on the time of flight associated with each of the received light pulse. The system further includes an image comparator to compare the generated image with at least one known image of the physical structure. The image comparator is adapted to compare the images based on the time of flight associated with each of the received light pulses. The system further includes a health indicator module for generating a health profile of the physical structure based at least in part on the comparison.

Another aspect provides a system for controlling a wind turbine includes a light source adapted to generate light pulses. The system also includes a beam scanner coupled with the light source. The beam scanner is adapted to scan the light pulses over a predefined capture area of the wind turbine. The system further includes a photo-detector adapted to receive backscattered light pulses from the wind turbine and subsequently provide a signal corresponding to each of the light pulse. The system further includes a pre-processing module to adjust a threshold of the signal based on a normalized value of a detected peak value of the signal. The system also includes an association module to associate a time of flight with each of the received backscattered light pulse. The system further includes an image generator to generate an image of the wind turbine based on the time of flight associated with each of the received light pulse. The system further includes an image comparator to compare the generated image with at least one known image of the wind turbine. The image comparator is adapted to compare the images based on the time of flight associated with each of the received light pulses. The system further includes a health indicator module for generating a health profile of the wind turbine based at least in part on the comparison.. The system also includes a control unit adapted to change one or more parameters of the wind turbine based at least in part on the health profile of the wind turbine.

A further aspect relates to a method of controlling a wind turbine includes sending a scanned light beam, constituted by light pulses over a pre-defined capture area of the wind turbine. The method also includes receiving backscattered light beam from the wind turbine. The method further includes generating a digitized voltage signal corresponding to each of the received backscattered light pulses. The method further includes detecting a peak value of the voltage signal. The method further includes adjusting a threshold of the voltage signal based on a normalized value of the detected peak value of the voltage signal. The method further includes calculating a time of flight corresponding to each of the received backscattered light pulses based at least in part on the adjusted threshold. The method also includes associating the calculated time of flight with each of the received backscattered light pulses. The method further includes generating an image of the wind turbine based on the associated time of flight with each of the received backscattered light pulses. The method further includes comparing the generated image with at least one known image of the wind turbine. The method further includes generating a health profile of the wind turbine based at least in part on the comparison. The method further includes controlling one or more parameters of the wind turbine based at least in part on the health profile of the wind turbine.

Various aspects and embodiments of the present invention will now be described in connection with the accompanying drawings, in which:
FIG. 1 is a simplified block diagram of a system for monitoring health of a physical structure, according to one embodiment;
FIG. 2 illustrates an environment for controlling a wind turbine using the system of FIG. 1, according to one embodiment;
FIG. 3 is a simplified block diagram of a system for controlling the wind turbine, according to another embodiment; and
FIG. 4 is a flowchart of an example process for controlling the wind turbine, according to one embodiment.

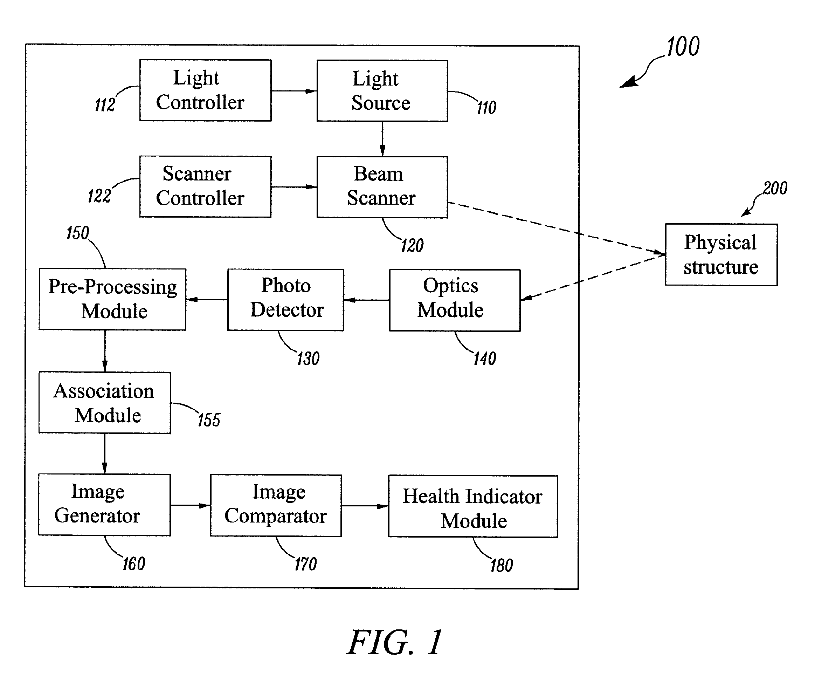

FIG. 1 illustrates a system 100 for monitoring the health of a physical structure 200, according to one embodiment. For example, the system 100 may be used in conjunction with the physical structure 200, which may be a wind turbine, a tower, a terrestrial structure, and an aerial structure, for monitoring the health thereof.

The system 100 may include a light source 110. The light source 110 may be adapted to generate a light beam, constituted by short light pulses. In an exemplary embodiment, the light source 110 may be a laser source, which is adapted to generate a laser beam. The terms "light beam" and "light pulses" may be hereinafter alternatively referred to as "light beam" and "light pulses."

The light source 110 may be a gas laser, a chemical laser, a dye laser, a metal-vapor laser, a solid-state laser, a semiconductor laser and the like. Further, in an exemplary embodiment, the light source 110 may be adapted to generate short light pulses of less than or equal to 1ns in duration. The system 100 may also include a light controller 112 coupled with the light source 110. The light controller 112 may be adapted to modulate an intensity of the light pulses from the light source 110.

The system 100 may further include a beam scanner 120 coupled with the light source 110. The beam scanner 120 may be a high speed scanner adapted to scan the light pulses generated by the light source 110. In one embodiment, the beam scanner 120 may employ an electro-optic deflector for deflecting the light pulses to achieve a high speed scanning rate. The beam scanner 120, and particularly, the electro-optic deflector may exhibit a scanning speed of more than about 2MHz. The system 100 may also include a scanner controller 122 coupled with the beam scanner 120. The scanner controller 122 is adapted to regulate a scanning speed of the beam scanner 120.

The scanned light pulses are directed over a pre-defined capture area of the physical structure 200. In an exemplary embodiment, the pre-defmed capture area may include the entire surface of the physical structure 200. Upon striking the physical structure 200, the directed scanned light beam may get backscattered (reflected back to the source direction) towards the system 100. In an embodiment of the disclosure, a time clock counter may be initiated as soon as the scanned light beam is directed over the physical structure 200. The time clock counter may enable a time of flight to be recorded for each of the light pulses as the light pulses travel to the physical structure 200 and get backscattered towards the light source 110, upon striking the physical structure 200.

The system 100 may include a photo-detector 130 for receiving the backscattered light pulses from the physical structure 200. In an embodiment, the system 100 may also include an optics module 140 associated with the photo-detector 130. The optics module 140 may include an arrangement of one or more lenses. The optics module 140 may enhance the collection of the backscattered light pulses from the physical structure 200. In one embodiment, the system 100 may employ a receiving telescope (not illustrated) for receiving the backscattered light pulses from the physical structure 200.

The photo-detector 130 upon receiving the backscattered light pulses may convert the backscattered light pulses into electric signals such as, but not limited to, a current signal. The photo-detector 130 is adapted to provide a current signal corresponding to each of the backscattered light pulses. In one embodiment, the photo-detector 130 is a fast response photo-detector, such as a Photomultiplier tube. Alternatively, the photo-detector 130 may be another type of photo-detector, such as one or more avalanche photodiodes. The photo-detector 130 may provide a combination of high gain, low noise, and high frequency response for the backscattered light pulses. The photo-detector 130 is capable of detecting backscattered light pluses separated by even less than 1ns and converts the backscattered light pulses into current signals.

The system 100 may further include a pre-processing module 150 coupled with the photo-detector 130. The pre-processing module 150 may include a current amplifier, a signal converter, a digital converter, a peak detector and a threshold setting module. The pre-processing module 150 may receive the current signal corresponding to each of the light pulses generated by the photo-detector 130. Subsequently, the current amplifier may amplify an amplitude of the current signal received from the photo-detector 130. Further, the signal converter may convert the analog current signal to a corresponding analog voltage signal, which is further converted to a digitized voltage signal by the digital convertor. The peak detector may correspondingly identify a peak value of the digitized voltage signal. Since, there may a power degradation with the distance corresponding to various components of the physical structure 200, from which the light pulses, upon striking, may get backscattered, neither peak detection of the signal nor a fixed threshold detection of the signal alone may provide a high enough resolution such as to a scale of about 1mm. Thus, the threshold setting module normalizes the digitized voltage signal with the detected peak value and then adjusts a threshold on the detected peak value as the median value of the digitized voltage signal. The threshold setting module sets the threshold for each image individually. Such an adaptive threshold setting technique may enhance the accuracy of time of flight calculation for each backscattered light pulse.

Further, the time clock counter may provide a precise time of flight for each of the light pulses that, upon striking, are backscattered from the various points on the surface of the physical structure 200. The precise time of flight may be calculated based at least in part on the consistent resolution that may be attained from the threshold adjustment. By counting the time between scanning of the light pulses, and returning of the backscattered light pulses, the distance between the light source and the various points on the surface of the physical structure 200 may be precisely calculated based on the constant speed of light in the air (299703 km/second). Also, the system 100 may include an association module 155 which is adapted to associate precisely calculated time of flight with each of the light pulse.

The distance between the light source and all the points on the surface of the physical structure 200 may be acquired continuously via scanning the light pulses with the scanner 120. Thus, an image generator 160, included in the system 100, may continuously generate one or more three-dimensional images of the physical structure 200 having a consistent resolution based on the time of flight associated with each of the light pulses. The three-dimensional images include a plurality of pixels, each pixel having an intensity value of the backscattered light pulse, and the precise time of flight value associated with each pixel.

The system 100 may further include an image comparator 170 coupled with the image generator 160. The image comparator 170 is adapted to compare the three-dimensional images, generated by the image generator 160. Specifically, the image comparator 170 may compare the three-dimensional images generated by the image generator 160, with a three-dimensional image of the physical structure 200 in an idle condition (healthy state). The image comparator 170 may have stored therein, the healthy state three-dimensional image of the physical structure 200. Alternatively, the healthy state three-dimensional image may be a three-dimensional image previously formed by the image generator 160. The image comparator 170 may compare the images based on the time of flight associated with each light pulse, based on which the images are generated by the image generator 160. Since, the images are compared based on the precisely calculated time of flight, the image comparator 170 may be adapted to determine displacement to a scale of about at least one millimeter in the structural configuration of the physical structure 200.

The system 100 may further include a health indicator module 180 coupled with the image comparator 170. The health indicator module 180 generates a health profile of the physical structure 200 based on the deviation/displacement in the structural configuration of the physical structure 200, determined by the image comparator 170. The health profile may include information pertaining to specific portions of the physical structure 200, upon which deviations in the structural configuration have occurred. Further, the health profile includes information regarding the extent of any deviations in the structural configuration of the specific portions of the physical structure 200. For example, the health profile may provide real time information about the distributed stress, strain, and vibration conditions on the specific portions of the physical structure 200. The health profile may further indicate (highlight) portions of the physical structure 200 having deviations in the structural configuration for which immediate inspection or maintenance is required. The health profile may be indicated by means of an alphanumeric display, a visual depiction of changes in the spectral signature, a flashing light or other such manners of indication.

In an embodiment of the disclosure, the image comparator 170 may compare the images of the physical structure in real time. For comparing the images in real time, the image comparator may receive multiple images simultaneously, which is achieved by utilizing the high speed scanner 120 having a scanning rate of more than about 100 Hz. Further, use of the short light pulses less than or equal to about 1ns and the use of high speed photo-detector 130, which is capable of detecting backscattered light pluses separated by even less than 1ns, may enable the image generator 160 to generate multiple images in a very short span of time. The above example of scanning rate and laser pulses may be specific to a particular kind of physical structure 200 such as wind turbine, however, it may be apparent to a person possessing ordinarily skill in the art that the scanning rate and the pulses duration may be changed as required with respect to the type of the physical structure 200.

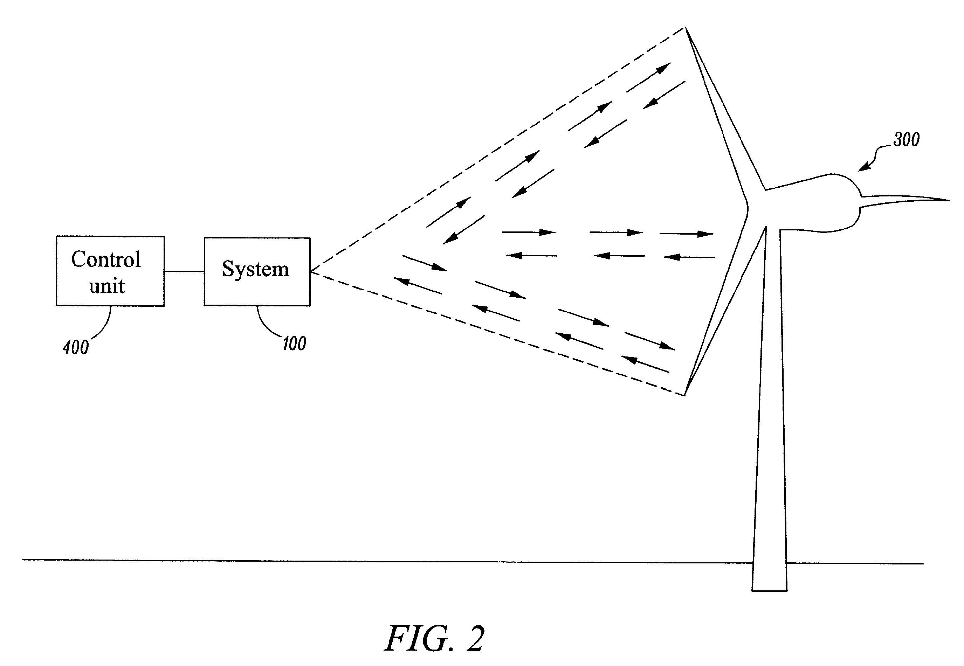

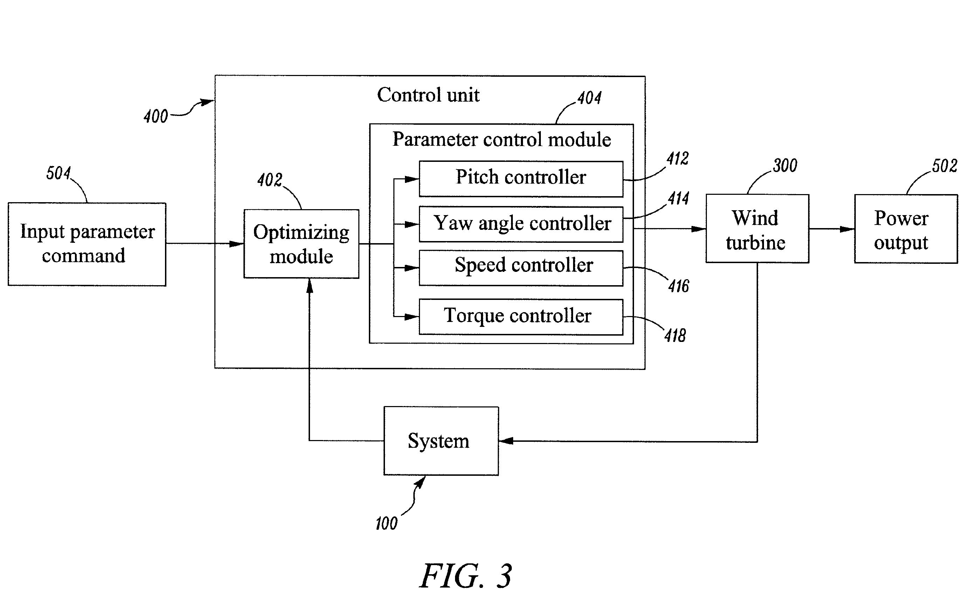

FIG. 2 illustrates an environment in which the system 100 is used in conjunction with the physical structure 200, such as a wind turbine 300. Specifically, FIG. 2 illustrates the system 100 utilized for controlling the wind turbine 300, according to an embodiment of the disclosure. The system 100 may be coupled with a control unit 400 (explained in detail in conjunction with FIG. 3) to remotely control parameters of the wind turbine 300 for allowing the wind turbine 300 to operate efficiently. It is to be understood that the system 100, shown in FIG. 2 is functionally and configurationally similar to the system 100 shown in FIG. 1.

The system 100 may include the light source 110 adapted to generate short light pulses, constituting a light beam. In an exemplary embodiment, the light source 110 may be adapted to generate light pulses of less than or equal to about one nanosecond. The system 100 may be further adapted to scan the light beam and direct the scanned light beam towards the wind turbine 300. In an exemplary embodiment, the system 100 may utilize a fast speed beam scanner 120, having a scanning rate of approximately 2MHz). The light pulses may get backscattered towards the system 100, upon striking various points on a surface of the wind turbine 300. The system 100 may receive the backscattered light pulses and may generate a current signal corresponding to each of the light pulses. Thereafter, the system 100 may amplify an amplitude of the current signal before converting the amplified current signal to an analog voltage signal. Further, the system 100 may digitize the analog voltage signal using any known analog to digital converters.

The system 100 may further process the digitized voltage signal to detect a peak value of the voltage signal to adjust a threshold of the voltage signal on the detected peak voltage signal. In one implementation, the system 100 may normalize the digitized voltage signal with the detected peak value and then adjust a threshold on the detected peak value as the median value of the digitized voltage signal. The threshold setting module sets the threshold for each image individually. Such an adaptive threshold setting technique may enhance the accuracy of time of flight calculation for each backscattered light pulse.

Further, as explained in FIG 1, a time clock counter may provide a precise time of flight for each of the light pulses that, upon striking, are backscattered from the various points on the surface of the physical structure. The precise time of flight may be calculated based at least in part on the consistent resolution that may be attained from the threshold adjustment. Also, the system 100 may associate precisely calculated time of flight with each of the light pulse.

The distance between the light source and all the points on the surface of the physical structure may be acquired real time via scanning the light pulses through the high speed beam scanner 120. Thus, the system 100, may continuously generate one or more three-dimensional images of the wind turbine 300 having a consistent resolution based on the time of flight associated with each of the light pulses. The three-dimensional images include a plurality of pixels, each pixel having an intensity value of the backscattered light pulse, and the precise time of flight value associated with each pixel.

The system 100 may further compare the three-dimensional images of the wind turbine 300 with a three-dimensional image of the wind turbine 300 in an idle condition (healthy state). The system 100 may have stored therein, the healthy state three-dimensional image of the wind turbine 300. Alternatively, the healthy state three-dimensional image may be a three-dimensional image previously generated by the system 100. The system 100 may compare the images based on the time of flight associated with each light pulse, based on which the images are generated. Since, the images are compared based on the precisely calculated time of flight, the system 100 may be adapted to determine any displacement to a scale of about at least one millimeter in the structural configuration of the wind turbine 300. The system 100 may subsequently generate a health profile for the wind turbine 300 based on the comparison of the three-dimensional images of the wind turbine 300.

The health profile generated by the system 100 for the wind turbine 300 may include information regarding displacement/deviation in the structural configuration of any component or portion of the wind turbine 300. Specifically, the health profile may provide real time information about the distributed stress, stain, and vibration condition on the component or portions of the wind turbine 300. For example, the health profile may include information for a blade shape, blade displacement, blade bending and twisting, wind turbine tower top displacement, stress and strain analysis of one or more components of the wind turbine, vibration in one or more components of the wind turbine, and nacelle yaw angle. The health profile may be indicated by means of an alphanumeric display, a visual depiction of changes in the spectral signature, a flashing light or other such manners of indication.

As shown in FIG. 2, the control unit 400 may be communicably coupled with the system 100. The control unit 400 may be adapted to change one or more parameters of the wind turbine 300 based at least in part on the health profile generated by the system 100. The control unit 400 is explained in greater detail in conjunction with the FIG. 3.

FIG. 3 is a schematic diagram illustrating the system 100 along with the details of the control unit 400. The control unit 400 may include an optimizing module 402 adapted to optimize the parameters of the wind turbine 300 for allowing the wind turbine 300 to operate efficiently. Specifically, the optimizing module 402 is adapted to determine the operational parameter values of various components of the wind turbine 300. For example, the operational parameter values may include, but are not limited to pitch of blades, a yaw angle, speed of a shaft, and torque on the shaft. The optimizing module 402 is adapted to optimize the operational parameter values for various components of the wind turbine 300 based on the generated health profile of the wind turbine 300. The generated health profile may include information regarding deviation in the structural configuration of the wind turbine 300. It is to be understood that the deviation in the structural configuration may have occurred due to excess or prolong stress and/or strain on any component or portion of the wind turbine 300. The optimizing module 402 may further consider an aerodynamic load of wind exposed to the wind turbine 300 while optimizing the operational parameter values.

The control unit 400 may also include a parameter control module 404 coupled with the optimizing module 402. The parameter control module 404 may receive the optimized operational parameter values, determined by the optimizing module 402, for controlling various components of the wind turbine 300. In an exemplary embodiment, the parameter control module 404 may include various operational parameter controls, such as a pitch controller 412 adapted to control pitch angle of wind turbine blades, a yaw angle controller 414 adapted to control angle of a yaw, a speed controller 416 adapted to control speed of a wind turbine shaft, and a torque controller 418 adapted to control torque on the wind turbine shaft. However, the parameter control module 404 may include other operational parameter controls, such as temperature controller, gearbox gear mesh frequency amplitude controller and the like.

As shown in FIG. 3, the wind turbine 300 may be associated with a power output 502. For example, the power output 502 may be 1000 kW. Further, to achieve the power output 502, the wind turbine 300 may be fed with input parameter command 504. The input parameter command 504 may include ideal operational parameter values, to be provided to the wind turbine 300 for achieving the power output 502. For example, the input parameter command 504 may include ideal values, for the pitch angle of the wind turbine blades, the yaw angle, the speed for the wind turbine shaft, and the torque for the wind turbine shaft, which allows the wind turbine 300 to generate the power output 502. It is to be understood that the input parameter command 504 may vary based on various aerodynamic loads to which the wind turbine 300 may be exposed.

In operation, the input parameter command 504 may provide the ideal operational parameter values to the control unit 400 to generate the power output 502. The system 100 may simultaneously monitor the wind turbine 300, and may generate a health profile for the wind turbine 300 based on the comparison of the three-dimensional images of the wind turbine 300. In an instance, when the system 100 may identify any deviation/displacement in structural configuration for any component or portion of the wind turbine 300 (which may be on the order of about 1 mm), the system 100 may generate a health profile. The health profile may highlight such deviation/displacement in structural configuration of the concerned portion or component of the wind turbine 300.

It is to be understood that the deviation in the structural configuration of any component or portion of the wind turbine 300 may occur when the wind turbine 300 may be subjected to an unexpected aerodynamic load of wind or unexpected weather condition. Alternatively, the deviation in the structural configuration of any component or portion may occur with time, when such component or portion may be subjected to continuous stress and/or strain. Due to such deviation in the structural configuration of the wind turbine 300, the wind turbine 300 may not be able to generate the power output 502. Accordingly, the operational parameter values of the wind turbine 300 need to be altered based on the health profile (deviation/displacement in the structural configuration of the wind turbine 300) generated by the system 100.

The deviation in the structural configuration of the component or portion of the wind turbine 300 may be a temporary deviation, in which such component or portion may be adapted to regain an original shape thereof. For example, when the wind turbine 300 may be exposed to the unexpected aerodynamic load, the components or various portions of the wind turbine 300, subjected to stress and/or strain, may undergo temporary deviation in terms of structural configuration. However, upon removal of the unexpected aerodynamic load, the components or various portions of the wind turbine 300 may regain the original shape thereof.

In case of temporary deviation in the structural configuration of the wind turbine 300, the operational parameter values of the wind turbine 300 may be altered by the control unit 400 to allow the wind turbine 300 to operate efficiently. For example, the deviation in the structural configuration may cause change in the operational parameter values, such as change in the pitch angle, the yaw angle, and the speed and torque of the shaft. The optimizing module 402 of the control unit 400 may accordingly optimize the changed operational parameter values. Specifically, the optimizing module 402 may compare the changed operational parameter values with the ideal operational parameter values. Thereafter, the optimized operational parameter values may be received by the parameter control module 404 for controlling various operational parameter controls, such as the pitch controller 412, the yaw angle controller 414, the speed controller 416 and the torque controller 418. This may allow the wind turbine 300 to operate efficiently for generating the power output 502.

Further, the deviation in the structural configuration of the component or portion of the wind turbine 300 may be even more significant, which may lead to catastrophic wind turbine failure. For example, sudden heavy aerodynamic wind loads may cause blades to twist, flap at the blade tips, or bend in the plane of rotation. In such instances, the health profile generated by the system 100 may provide information regarding such deviation in the structural configuration of the wind turbine 300. Accordingly, an overspeed protection mechanism, such as aerodynamically braking blades and friction brakes, may be applied to protect the wind turbine 300 from damage against such heavy aerodynamic wind loads.

Furthermore, the deviation in the structural configuration of the component or portion of the wind turbine 300 may be a permanent deviation. For example, excess or prolonged stress and/or strain on any component or portion of the wind turbine 300 may cause bending or cracking in such component or portion. In such an instance, the health profile generated by the system 100 provides information pertaining to such deviation in the structural configuration of the wind turbine 300. Accordingly, the wind turbine 300 may be stopped in order to perform the necessary inspection and/or maintenance work on the component or portion of the wind turbine 300 so as to avoid failure thereof.

In yet another embodiment, the system 100 may be utilized for monitoring and controlling a plurality of wind turbines, such as the wind turbine 300. Specifically, the system 100 may be employed on a wind farm having a plurality of wind turbines. In such an instance, the system 100 may be adapted to monitor and control the plurality of wind turbines based on the health profile, generated with the comparison of three-dimensional images of the wind turbines. It is to be understood that the system 100 may be associated with a driving mechanism, which may allow the system 100 to reach the plurality of wind turbines installed in the wind farm.

Further, the driving mechanism may be organized in a manner such that the system 100 may maintain an appropriate fixed distance with the wind turbines. One suitable example of the driving mechanism may include but is not limited to a wheel and rail arrangement. The driving mechanism may further include a driving means, which may allow the system 100 to automatically reach the wind turbines. Alternatively, the system 100 may be associated with a rotating mechanism for monitoring and controlling the plurality of wind turbines. The rotating mechanism may facilitate the system 100 in rotating about an axis thereof. It is to be understood that the system 100 may be positioned with respect to the wind turbines such that the system 100 may maintain an appropriate fixed distance with the wind turbines.

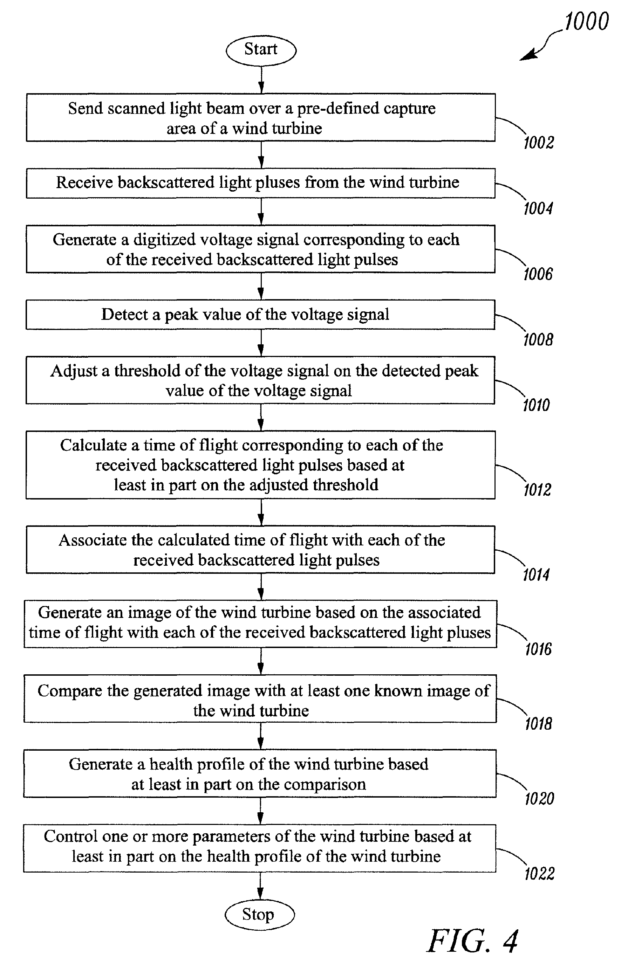

Referring now to FIG. 4, a flowchart of an example method 1000 for controlling the wind turbine 300 is shown, according to another embodiment. The method 1000 may control the wind turbine 300 based on the health profile generated with real time comparison of high resolution three-dimensional images of the wind turbine 300. Based on the health profile, operational parameters of the wind turbine 300 may be altered for controlling the wind turbine 300.

At 1002, a scanned light beam may be sent towards a pre-defined capture area the wind turbine 300. In an exemplary embodiment, the light beam may include short light pulses of less than or equal to about 1 ns. The light beam may be scanned by the beam scanner 120 coupled with the light source 110. In an exemplary embodiment, the beam scanner 120 may exhibit a scanning speed of more than about 2 MHz.

In an exemplary embodiment, the pre-defined capture area may include the entire area of the wind turbine 300. Upon striking the wind turbine 300, the directed scanned light beam may get backscattered (reflected back to the direction it came from).

At 1004, the photo-detector 130 may receive the backscattered light beam from the wind turbine 300. In an exemplary embodiment, the optics module 140 is coupled with the photo-detector 130 and the optics module 140 may enhance a collection of the backscattered light pulses from the wind turbine 300.

In an embodiment of the disclosure, the photo-detector 130, upon receiving the backscattered light pulses, may convert the backscattered light pulse energy into electrical signals such as a current signal corresponding to each of the light pulses. The photo-detector 130 may provide a combination of high gain, low noise, and high frequency response for the backscattered light beam. The photo-detector 130 may be capable of detecting backscattered light pluses separated by even less than 1ns and still convert the backscattered light pulses energy into current signals. Further, the pre-processing module 150 may amplify an amplitude of the current signal.

At 1006, the pre-processing module 150 may convert the current signal to an analog voltage signal and subsequently, employ an analog to digital converter to digitize the voltage signal corresponding to each of the received backscattered light pulses.

At 1008, a peak value of the digitized voltage signal may be detected and subsequently, at 1010, the threshold setting module may normalize the digitized voltage signal with the detected peak value and then adjust a threshold on the detected peak value as median value of the digitized voltage signal. The threshold setting module sets the threshold for each image individually. Such an adaptive threshold setting technique may enhance the accuracy of time of flight calculation for each backscattered light pulse.

At 1012, the time clock counter may provide a precise time of flight for each of the light pulses that, upon striking, are backscattered from the various points on the surface of the wind turbine 300. The precise time of flight may be calculated based at least in part on the consistent resolution that may be attained from the threshold adjustment. By counting the time between scanning of the light pulses, and returning of the backscattered light pulses, the distance between the light source and the various points on the surface of the wind turbine 300 may be precisely calculated based on the constant speed of light in the air ( 299703 km/second). Subsequently, at 1014, the association module 155 may associate the precisely calculated time of flight with each of the light pulse.

The distance between the light source and all the points on the surface of the wind turbine 300 may be acquired continuously via scanning the light pulses with the scanner 120. Thus, at 1016, the image generator 160 may continuously generate one or more three-dimensional images of the wind turbine 300 having a consistent resolution based on the time of flight associated with each of the light pulses.

At 1018, the image comparator 170 may compare the generated three-dimensional images of the wind turbine 300 with a three-dimensional image of the wind turbine 300 in an idle condition (healthy state). The image comparator 170 may compare the images based on the time of flight associated with each light pulse, based on which the images are generated by the image generator 160. Since, the images are compared based on the precisely calculated time of flight, the image comparator 170 may be adapted to determine displacement to a scale of about at least one millimeter in the structural configuration of the wind turbine 300.

At 1020, the health indicator module 180 may generate a health profile of the wind turbine 300 based on the deviation/displacement in the structural configuration of the wind turbine 300, determined by the image comparator 170. The health profile may include information pertaining to specific portions, of the wind turbine 300, on which deviation/displacement in the structural configuration have occurred. Further, the health profile includes information regarding the extent of deviation in the structural configuration of the specific portions of the wind turbine 300. For example, the health profile may provide real time information about the distributed stress, stain, and vibration condition on the specific portions of the wind turbine 300.

At 1022, the control unit 400 may control one or more operational parameters values of the wind turbine 300 based on the generated health profile of the wind turbine 300. For example, based on a deviation in the structural configuration of the wind turbine 300 may cause the control unit 400 to change in the operational parameter values, such as change in the pitch angle, the yaw angle, and the speed and torque of the shaft.

Various aspects and embodiments of the present invention are defined by the following numbered clauses:
1. A system comprising:
   a light source adapted to generate light pulses;
   a beam scanner coupled with the light source, wherein the beam scanner is adapted to scan the light pulses over a predefined capture area of a physical structure;
   a photo-detector adapted to receive backscattered light pulses from the physical structure and wherein the photo-detector is adapted to provide a signal corresponding to each of the light pulse;
   a pre-processing module adapted to adjust a threshold of the signal based on a normalized value of a detected peak value of the signal;
   an association module adapted to associate a time of flight with each of the received backscattered light pulse;
   an image generator adapted to generate an image of the physical structure based on the time of flight associated with each of the received light pulse;
   an image comparator to compare the generated image with at least one known image of the physical structure, wherein the image comparator is adapted to compare the images based on the time of flight associated with each of the received light pulses; and
   a health indicator module for generating a health profile of the physical structure based at least in part on the comparison.
2. The system of clause 1, wherein the light source is a laser source adapted to generate laser pulses.
3. The system of any preceding clause, wherein the pre-processing module comprises:
   a current amplifier adapted to amplify an amplitude of the current signal received from the photo-detector;
   a signal converter adapted to convert the amplified current signal to a analog voltage signal;
   a digital converter adapted to digitize the analog voltage signal;
   a peak detector adapted to detect a peak value of the digitized voltage signal; and
   a threshold setting module adapted to normalize the digitized signal with the detected peak value of the voltage signal and adjust a threshold on the detected peak value as median value of the normalized digitized voltage signal.
4. The system of any preceding clause, wherein the physical structure comprises at least one of a wind turbine, a tower, a terrestrial structure, and an aerial structure.
5. The system of any preceding clause, further comprising an optics module associated with the photo-detector, wherein the optics module enhances the collection of backscattered light pulses.
6. The system of any preceding clause, wherein the image comparator is adapted to determine a displacement to a scale of at least one millimeter in the physical structure based on a comparison of the associated time of flight of received light pulses in the images.
7. The system of any preceding clause, wherein the time of flight is precise time between the light pulse initiated from the light source and the light pulse received by the photo-detector.
8. The system of any preceding clause, wherein the image comparator is adapted to compare the images in real time.
9. A system for controlling a wind turbine, the system comprising:
   a light source adapted to generate light pulses;
   a beam scanner coupled with the light source, wherein the beam scanner is adapted to scan the light pulses over a predefined capture area of the wind turbine;
   a photo-detector adapted to receive backscattered light pulses from the wind turbine and wherein the photo-detector is adapted to provide a signal corresponding to each of the light pulse;
   a pre-processing module adapted to adjust a threshold of the signal based on a normalized value of a detected peak value of the signal;
   an association module adapted to associate a time of flight with each of the received backscattered light pulse;
   an image generator adapted to generate an image of the wind turbine based on the time of flight associated with each of the received light pulse;
   an image comparator to compare the generated image of the wind turbine with at least one known image of the wind turbine, wherein the image comparator is adapted to compare the images based on the time of flight associated with each of the received light pulses;
   a health indicator module for generating a health profile of the wind turbine based at least in part on the comparison; and
   a control unit adapted to change one or more parameters of the wind turbine based at least in part on the health profile of the wind turbine.
10. The system of any preceding clause, wherein the pre-processing module comprises:
   a current amplifier adapted to amplify an amplitude of the current signal received from the photo-detector;
   a signal converter adapted to convert the amplified current signal to an analog voltage signal;
   a digital converter adapted to digitize the analog voltage signal;
   a peak detector adapted to detect a peak value of the digitized voltage signal; and
   a threshold setting module adapted to normalize the digitized signal with the detected peak value of the voltage signal and adjust a threshold on the detected peak value as median value of the normalized digitized voltage signal.
11. The system of any preceding clause, wherein the known image comprises at least one of a previously formed image from the image generator, image of the wind turbine in idle condition.
12. The system of any preceding clause, wherein the health profile comprises information related to at least one of a blade shape, blade displacement, blade bending and twisting, wind turbine tower top displacement, stress and strain analysis of one or more components of the wind turbine, vibration in one or more components of the wind turbine, and nacelle yaw angle.
13. The system of any preceding clause, wherein the control unit changes one or more parameters of the wind turbine based on the health profile of the wind turbine and a power requirement from the wind turbine.
14. The system of any preceding clause, wherein the one or more parameters of the wind turbine comprises at least one of a pitch, yaw angle, speed and torque.
15. The system of any preceding clause, wherein the control unit is adapted to control a plurality of wind turbines installed in a wind farm.
16. The system of any preceding clause, wherein the health indicator module is adapted to generate health profiles for the plurality of wind turbines installed in the wind farm.
17. A method of controlling a wind turbine, the method comprising;
   sending scanned light beam, constituted by light pulses over a pre-defined capture area of the wind turbine;
   receiving backscattered light pulses from the wind turbine;
   generating a digitized voltage signal corresponding to each of the received backscattered light pulses;
   detecting a peak value of the voltage signal;
   adjusting a threshold of the voltage signal based on a normalized value of the detected peak value of the voltage signal;
   calculating a time of flight corresponding to each of the received backscattered light pulses based at least in part on the adjusted threshold;
   associating the calculated time of flight with each of the received backscattered light pulses;
   generating an image of the wind turbine based on the associated time of flight with each of the received backscattered light pulses;
   comparing the generated image with at least one known image of the wind turbine;
   generating a health profile of the wind turbine based at least in part on the comparison; and
   controlling one or more parameters of the wind turbine based at least in part on the health profile of the wind turbine.
18. The method of any preceding clause, further comprising for each of the received backscattered light pulse:
   generating a current signal;
   amplifying an amplitude of the current signal;
   converting the amplified current signal to an analog voltage signal; and
   converting the analog voltage signal to a digitized voltage signal.
19. The method of any preceding clause, wherein adjusting comprises normalizing the voltage signal with the detected peak value and adjusting the threshold on the detected peak value as median value of the voltage signal.
20. The method of any preceding clause, wherein the one or more parameters of the wind turbine comprises at least one of a pitch, yaw angle, speed and torque.

## Claims

1. A system (100) comprising:
a light source (110) adapted to generate light pulses;
a beam scanner (120) coupled with the light source (110), wherein the beam scanner (120) is adapted to scan the light pulses over a predefined capture area of a physical structure (200);
a photo-detector (130) adapted to receive backscattered light pulses from the physical structure (200) and wherein the photo-detector (130) is adapted to provide a signal corresponding to each of the light pulse;
a pre-processing module (150) adapted to adjust a threshold of the signal based on a normalized value of a detected peak value of the signal;
an association module (155) adapted to associate a time of flight with each of the received backscattered light pulse;
an image generator (160) adapted to generate an image of the physical structure (200) based on the time of flight associated with each of the received light pulse;
an image comparator (170) to compare the generated image with at least one known image of the physical structure (200), wherein the image comparator (170) is adapted to compare the images based on the time of flight associated with each of the received light pulses; and
a health indicator module (180) for generating a health profile of the physical structure (200) based at least in part on the comparison.

2. The system (100) of claim 1, wherein the light source (110) is a laser source adapted to generate laser pulses.

3. The system (100) of any preceding claim, wherein the pre-processing module (150) comprises:
a current amplifier adapted to amplify an amplitude of the current signal received from the photo-detector;
a signal converter adapted to convert the amplified current signal to a analog voltage signal;
a digital converter adapted to digitize the analog voltage signal;
a peak detector adapted to detect a peak value of the digitized voltage signal; and
a threshold setting module adapted to normalize the digitized signal with the detected peak value of the voltage signal and adjust a threshold on the detected peak value as median value of the normalized digitized voltage signal.

4. The system (100) of any preceding claim, wherein the physical structure (200) comprises at least one of a wind turbine, a tower, a terrestrial structure, and an aerial structure.

5. The system (100) of any preceding claim, further comprising an optics module (140) associated with the photo-detector (130), wherein the optics module (140) enhances the collection of backscattered light pulses.

6. The system (100) of any preceding claim, wherein the image comparator (170) is adapted to determine a displacement to a scale of at least one millimeter in the physical structure (200) based on a comparison of the associated time of flight of received light pulses in the images.

7. The system (100) of any preceding claim, wherein the time of flight is precise time between the light pulse initiated from the light source (110) and the light pulse received by the photo-detector (130).

8. The system (100) of any preceding claim, wherein the image comparator (170) is adapted to compare the images in real time.

9. A system (100) for controlling a wind turbine (300), the system (100) comprising:
a light source (110) adapted to generate light pulses;
a beam scanner (120) coupled with the light source (110), wherein the beam scanner (120) is adapted to scan the light pulses over a predefined capture area of the wind turbine (300);
a photo-detector (130) adapted to receive backscattered light pulses from the wind turbine (300) and wherein the photo-detector (130) is adapted to provide a signal corresponding to each of the light pulse;
a pre-processing module (150) adapted to adjust a threshold of the signal based on a normalized value of a detected peak value of the signal;
an association module (155) adapted to associate a time of flight with each of the received backscattered light pulse;
an image generator (160) adapted to generate an image of the wind turbine (300) based on the time of flight associated with each of the received light pulse;
an image comparator (170) to compare the generated image of the wind turbine (300) with at least one known image of the wind turbine (300), wherein the image comparator (170) is adapted to compare the images based on the time of flight associated with each of the received light pulses;
a health indicator module (180) for generating a health profile of the wind turbine (300) based at least in part on the comparison; and
a control unit (400) adapted to change one or more parameters of the wind turbine (300) based at least in part on the health profile of the wind turbine (300).

10. The system (100) of claim 9, wherein the pre-processing module comprises:
a current amplifier adapted to amplify an amplitude of the current signal received from the photo-detector;
a signal converter adapted to convert the amplified current signal to an analog voltage signal;
a digital converter adapted to digitize the analog voltage signal;
a peak detector adapted to detect a peak value of the digitized voltage signal; and
a threshold setting module adapted to normalize the digitized signal with the detected peak value of the voltage signal and adjust a threshold on the detected peak value as median value of the normalized digitized voltage signal.
